# EUROPEAN PATENT APPLICATION

(11) **EP 1 571 424 A1**
(43) Date of publication of application: **07.09.2005**
(21) Application number: 05075493.6
(22) Date of filing: 28.02.2005
(51) Int. Cl.: G01D 5/14

(54) **Apparatus for sensing angular positions of an object**

(30) Priority: 03.03.2004 US 792488
(71) Applicant: Delphi Technologies, Inc., Troy, MI 48007 (US)
(72) Inventor: Godoy, Arquimedes, 32690 Juarez Chihuahua (MX); Daniel, Martinez, El Paso, TX 79927 (US); Almaraz, Jose L., 32505 Juarez Chihuahua (MX)
(74) Representative: Denton, Michael John

(57) **Abstract**

An apparatus for sensing a position of an object is provided that may include a magnet (22) mounted for rotation about an axis and a magnetic field-sensing device (24) mounted in fixed relation to and spaced from the magnet wherein the magnet is shaped to define a distance (26) between an exterior surface of the magnet (22) and a surface of the magnetic field-sensing device whereby rotation of the magnet causes the distance to change at a rate so that a flux density distribution sensed by the magnetic field-sensing device changes at a substantially linear rate. In one aspect the magnet is configured to have a substantially elliptical shape and the magnetic field-sensing device is a Hall-effect sensor. A sensor system (40) may include a housing (42), a magnet having an exterior surface defining a radius of curvature and a shaft (44) rotatably coupled with the housing with the magnet connected to the shaft for rotation about an axis in response to an angular displacement of an object. A magnetic field-sensing device may be provided that is coupled with the housing and spaced from the magnet to define an air gap (26) there between. The air gap may change at a rate in response to rotation of the magnet so that a flux density level sensed by the magnetic field-sensing device changes at a substantially linear rate.

## Description

### FIELD OF THE INVENTION

The present invention relates in general to angular position sensors and in particular to a sensor using a magnet shaped for reducing nonlinearity.

### BACKGROUND OF THE INVENTION

Some motor vehicle control systems require angular position sensors that need only sense partial angular motion of one part relative to another part, e.g., less than plus or minus ninety degrees. Magnets having certain shapes, such as rectangular, have been used with magnetic field sensors in order to provide non-contact angular position sensors that sense partial angular motion. Angular position sensors utilizing rotating magnets sensed by stationary magnetic field sensors typically produce a sinusoidal or pseudo-sinusoidal output signal. Such signals may somewhat approximate a linear output signal at least over a limited angular range. Also, resistance-strip position sensors have been widely used to determine the position of a moving part relative to a corresponding stationary part. Such sensors can have reliability problems due to the susceptibility of the resistance-strips to premature wear. Also, the vibration of contact brushes along the resistance-strips may cause unacceptable electrical noise in the output signals.

Rotational sensors, typically used to sense angle ranges of less than or equal to approximately 45 degrees, commonly use dual magnet arrays to improve linear responses of the sensor. A dual magnet array typically consists of two magnets creating a changing magnetic field there between as the magnets are rotated. A sensing element placed between these magnets may detect the amount of flux lines crossing perpendicular to the element. The field distribution detected by the element will yield a response that is relatively linear. Certain rotational sensors, such as that disclosed in U.S. Patent No. 6,576,890 utilize flux concentrators to adjust the spatial distribution of the magnetic field as detected by the sensing element. Flux concentrators, however, add to the cost and complexity of the sensor and may add hysteresis to the overall magnetic circuit. Hysteresis causes an undesirable effect for angular position sensors.

### BRIEF SUMMARY OF THE INVENTION

An array using at least one magnet and a sensing device is provided. A second sensing device may be added on the opposite side of the magnet for redundancy options. It has been determined that nonlinear magnetic behavior produced by an ordinary magnet shape, such as rectangular, may be compensated for by shaping the magnet to a different geometry. The resulting geometry may provide a more linear output than the systems mentioned above and at a lower cost. In one aspect of the invention, an elliptical shape is used as the geometry for the magnet.

An apparatus for sensing a position of an object is provided that may include a magnet mounted for rotation about an axis and a magnetic field-sensing device mounted in fixed relation to and spaced from the magnet wherein the magnet is shaped to define a distance between an exterior surface of the magnet and a surface of the magnetic field-sensing device whereby rotation of the magnet causes the distance to change at a rate so that a flux density distribution sensed by the magnetic field-sensing device changes at a substantially linear rate. In one aspect the magnet is configured to have a substantially elliptical shape and the magnetic field-sensing device is a Hall-effect sensor.

A sensor system is provided that may include a housing, a magnet having an exterior surface defining a radius of curvature and a shaft rotatably coupled with the housing with the magnet connected to the shaft for rotation about an axis in response to an angular displacement of an object. A magnetic field-sensing device may also be provided that is coupled with the housing and spaced from the magnet so that an air gap is defined between the exterior surface of the magnet and the magnetic field-sensing device. This air gap may be configured to change at a rate in response to rotation of the magnet so that a flux density level sensed by the magnetic field-sensing device changes at a substantially linear rate.

### BRIEF DESCRIPTION OF THE DRAWINGS

The invention will be more apparent from the following description in view of the drawings that show:
FIG. 1 illustrates a representation of a prior art sensing device using a dual magnet array.
FIG. 2 illustrates a front view of an exemplary embodiment of an angular position-sensing device.
FIG. 3 illustrates the exemplary device of FIG. 2 without flux lines.
FIG. 4 illustrates the exemplary device of FIG. 2 with an exemplary magnet of the device rotated into a different position.
FIG. 5 illustrates the exemplary device of FIG. 2 with an exemplary magnet of the device rotated into a different position.
FIG. 6 is a graph illustrating the output signal linearity using an exemplary embodiment of the device of FIG. 2.
FIG. 7 illustrates a block diagram of an exemplary vehicle system in which an exemplary sensor in accordance with aspects of the invention may be installed.
FIG. 8 illustrates a schematic of flux density distribution and direction of magnetism in an exemplary embodiment of the invention.

### DETAILED DESCRIPTION OF THE INVENTION

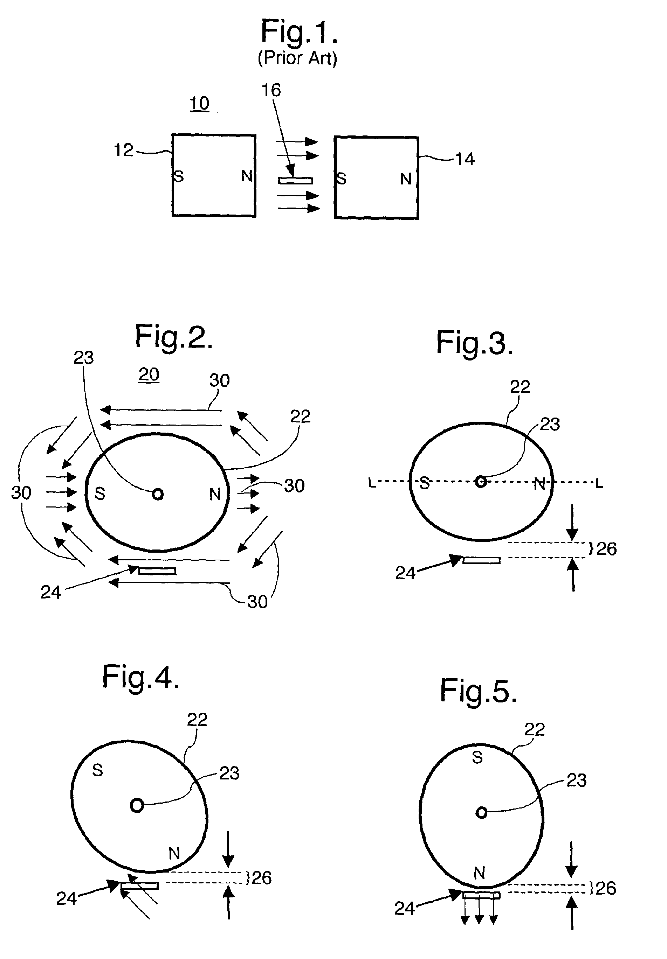

FIG. 1 illustrates a prior art sensing device 10 that uses a dual magnet array to yield somewhat linear magnetic responses. Device 10 includes a first magnet 12 and a second magnet 14 that create a magnetic field that changes as the magnets are rotated about a sensing element 16. Sensing element 16 is positioned in the middle of the two magnets 12, 14 and may be configured to detect the amount of flux lines crossing perpendicular to the sensing element 16. The field distribution detected by sensing element 16 may yield a response that approaches linearity. However, it has been determined that by using a single magnet, shaping it to a specific geometry and determining certain sensor system design parameters as a function of the magnet's shape, a more linear output from a sensing element may be obtained than the sensing device 10 of FIG. 1.

FIG. 2 illustrates an exemplary embodiment of a sensor system 20 in accordance with aspects of the invention. One aspect allows for sensor system 20 to include a magnet 22 configured to have an elliptical shape wherein an exterior surface of magnet 22 defines a radius of curvature. In accordance with aspects of the invention, the magnet's size and shape, or axial ratio, either alone or with respect to other design parameters of sensor system 20 may be determined through a series of magneto-static simulations. Such simulations may utilize any of various numerical techniques, such as the finite element method or method of weighted residuals for example, that directly solve Maxwell's Equations. Such a magneto-static simulation is well understood by those skilled in the art and lends itself very well to utilizing both robust engineering techniques and simulation to achieve an optimum design. Determining an optimum design in terms of linearity through simulation may provide a solid foundation but may not necessarily be the most robust design relative to practical physical constraints, for example, such as those resulting from variations in manufacturing or assembly of a sensor system 20. In this respect, an engineering decision may be made, based on the operating environment for the sensor system 20, regarding the range of acceptable limits of sensor system 20 design parameters. It will be appreciated that alternate embodiments may use varying geometric shapes for the magnet.

When shaping magnets for use with exemplary sensor systems 20, one objective may be to achieve a linearly decreasing or increasing, depending on the direction of rotation of the magnet, flux density as observed by a sensing surface of a field-sensing device 24. In one aspect of the invention, design or sensor system parameters used for shaping a magnet may include the component of the magnetic field being sensed by device 24, the total magnet-to-sensing device air gap 26 and the vector direction of the magnet's flux lines at the face of sensing device 24. Inventors of the present invention have determined that using these sensor system parameters allows for determining a magnet's shape for reducing nonlinearities in embodiments of the invention. In an embodiment of the invention, as elliptically shaped magnet 22 is rotating about an axis the combined effect of air gap 26, the magnetic field component perpendicular to sensing device 24 and the flux line strength yield a flux density level that reduces sensor nonlinearity. In this respect, the flux line strength is the strength of a flux line at any point in space and the flux density distribution is the amount of flux or flux lines, per unit area, passing through the sensing portion of sensing device 24. It will be appreciated by those skilled in the art that a field component parameter other than the field component perpendicular to sensing device 24, such as one parallel thereto, may be used depending on the sensing device being used.

In an embodiment magnet 22 may be configured to rotate about an axis, such as axis 23, that may be substantially transverse to the magnet's 22 longitudinal axis "L" illustrated in FIG. 3. For example, magnet 22 may be mechanically or otherwise mounted to axis 23 so that it may rotate clockwise and/or counterclockwise as shown in FIGS. 2-5 and 7. In an embodiment, magnet 22 may be mounted for rotation through approximately 180 degrees. Magnetic field-sensing device 24 may be positioned a predetermined distance from magnet 22 to define a gap or air gap 26 there between. Air gap 26 may vary as a function of the magnet's 22 rotation as illustrated in FIGS. 3-5. In an embodiment, field-sensing device 24 may be a Hall-effect sensor for sensing amplitude of a perpendicular field component. More generally, sensing device 24 may be a galvanomagnetic type sensor, for example. Those skilled in the art will recognize alternate sensing devices, such as those configured for sensing field components parallel to a sensing service, which may be used in accordance with aspects of the invention.

One aspect allows for sensing device 24 to remain stationary, i.e., be in fixed relation with respect to magnet 22, while magnet 22 rotates about an axis, such as axis 23. In this respect, sensing device 24 may be mounted to a platform or support plate (not shown) that may be appropriately positioned within or proximate a structure or object for which an angular position is to be determined using sensor system 20. For example, magnet 22 may be mechanically or otherwise mounted in relation to sensing device 24 to define air gap 26 and rotate within an angular range. As most clearly illustrated in FIG. 1, and recognized by those skilled in the art, rotation of magnet 22 produces a change in the direction of flux lines 30, which cross through the sensing device 24. One aspect allows for the maximum and minimum values of air gap 26 to vary as a function of various design parameters such as magnet strengths and the manufacturing and/or assembly method, for example. Other design parameters affecting air gap 26 will be recognized by those skilled in the art.

The size or value of a gap 26 for a particular sensor system 20 may be determined using known techniques such as by performing computer simulations or conducting laboratory testing. In one aspect of the invention, air gap 26 is sized to be as small as possible taking into account various manufacturing constraints. Minimizing the size of air gap 26 allows for using magnets 22 of relatively less strength, which reduces manufacturing costs. Another aspect of the invention allows for sizing air gap 26 so it changes at a rate when magnet 22 rotates that produces a consistent linear or substantially linear response over a range of angular rotation in view of other sensor system 20 parameters. For example, sizing air gap 26 may be a function of the magnetic flux properties of magnet 22 such as the flux density, flux strength and/or flux direction changes observed at the sensing portion of sensing device 24 as magnet 22 rotates. Computer simulations such as finite elements and/or Monte Carlo analysis may be used for sizing air gap 26 as well as physical testing. Variations resulting from manufacture or assembly tolerances that vary outside acceptable limits may be compensated for during calibration at the end of the manufacturing line.

In one aspect of the invention, as can be seen with reference to the exemplary embodiments of FIGS. 3, 4 and 5, rotation of magnet 22 relative to sensing devices 24 varies the distance defined by air gap 26 between an exterior surface of magnet 22 and sensing device 24. As illustrated in the exemplary embodiment of FIG. 3, the maximum air gap 26 distance or condition exists at the zero flux position or when all flux lines 30 (shown in FIG. 2) are parallel to sensing device 24. As magnet 22 rotates the angular position of flux lines 30 crossing the sensing devices 24 changes, which causes the flux density distribution measured by sensing device 24 to increase. With respect to known sensor systems, it has been observed that similar changes in flux density distributions commonly have a sinusoidal shape. One aspect allows for compensating for this sinusoidal shape by varying air gap 26. In this respect, the strength of flux lines 30 diminish as 1/(R³) in free-space where R is the distance, or air gap 26, from the source. Also, flux lines repel each other and seek the path of least reluctance. As illustrated in FIG. 2, flux lines 30 exit magnet 22 through the North pole "N" and complete the circuit on the South pole "S". As they complete this path/circuit their direction changes thereby changing the perpendicular component of the field being sensed by sensing device 24 at every point in space.

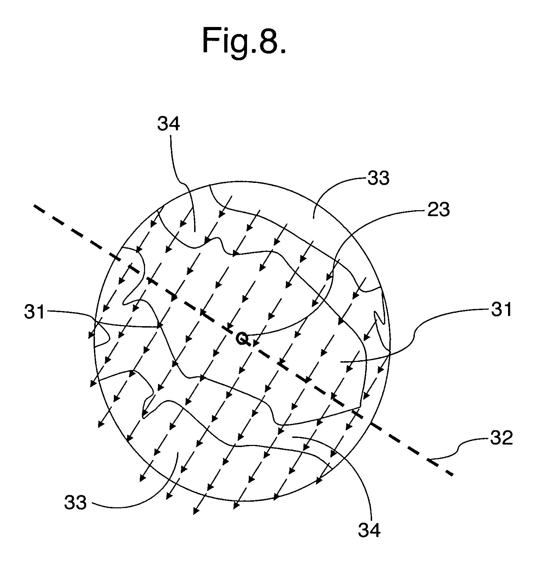

Further, with reference to FIG. 8, the flux density distribution on a cross section of an elliptical magnet (arrows indicate direction of magnetization), such as magnet 22, varies, as indicated by regions 31, 33, 34. The flux density distribution changes from region to region. It will be appreciated that FIG. 8 illustrates three regions of varying flux density distribution by way of example and that the number of such regions and the rate of change in flux density distribution may vary as a function a magnet's properties. For example, with respect to the elliptical magnet of FIG. 8, a relatively stronger flux density distribution is localized in region 31 along an imaginary longitudinal axis 32 that separates the North "N" and South "S" poles. Consequently, as magnet 22 turns or rotates about axis 23, the sensing device 24 senses flux lines of different strength as sensing device 24 goes from being close to a relatively weaker flux density region 33 to being close to the relatively stronger flux density region 31.

In an exemplary embodiment, a minimum air gap 26 distance or condition is shown in FIG. 5 and yields the maximum flux condition, i.e., when all flux lines 30 are perpendicular to sensing device 24. The exemplary elliptical shape of magnet 22 compensates for the non-linear effect caused by the angular change of flux lines 30 when magnet 22 rotates through a range of motion. This exemplary shape causes the air gap 26 between the exterior surface of magnet 22 and sensing device 24 to change at a rate as magnet 22 rotates allowing for the magnetic flux line density through the sensing device 24 to increase linearly.

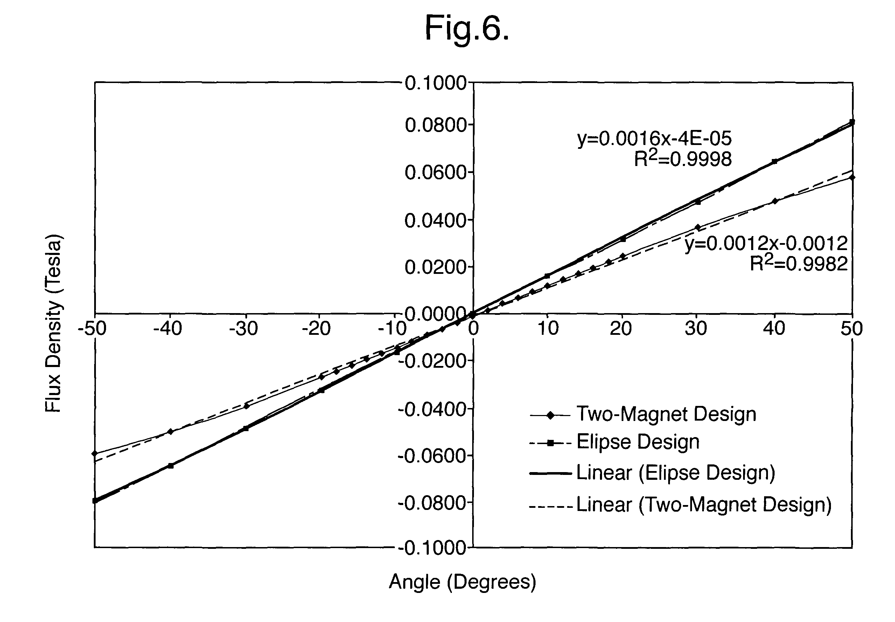

FIG. 6 illustrates a graph comparing the performance between a typical prior art two-magnet design sensor (FIG. 1), such as a quarter-turn sensor, and an embodiment of the present invention using an exemplary elliptical magnet 22. As shown in FIG. 6, it can be observed that a better performance or linearity can be obtained using the exemplary elliptical magnet 22 and varying air gap 26 when the magnet is rotated relative to sensing element 24. It will be appreciated that embodiments of the present invention need fewer components than many prior art devices, which decreases not only the cost of the components but also of assembling the device.

It will be appreciated by those skilled in the art that various embodiments of the invention may be used in a wide range of applications. For example, an exemplary embodiment of sensing system 20 shown in FIGS. 2-5 may be used in a vehicle, such as an automobile, for sensing the angular position of various components that rotate. For example, embodiments of sensing system 20 may be used as throttle position sensors, brake pedal sensors, accelerator pedal sensors, lift-gate sensors (mini vans), EGR valve sensors, body height (chassis) sensors, light leveling/aiming sensors or sensors used with link arms for heavy machinery.

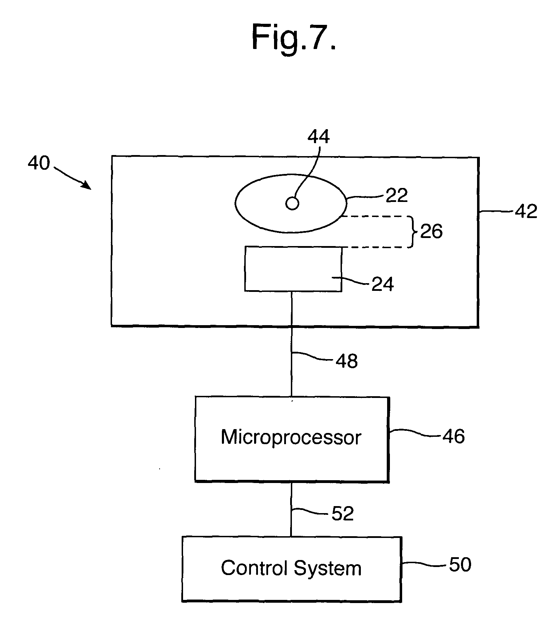

Referring to FIG. 7, a block diagram representing a vehicle control system is shown and generally designated 40. FIG. 7 illustrates that vehicle control system 40 may include a housing 42 within which magnet 22 may be mounted on a shaft 44 for rotation about an axis. Sensing device 24 may be mounted within housing 42 and spaced from magnet 22 so that air gap 26 is suitably calibrated there between. Sensing device 24 may be electrically connected to a microprocessor 46 or equivalent circuit via an electrical line 48. A control system 50 may be electrically coupled to microprocessor 46 by an electrical line 52. As magnet 22 turns in either rotational direction about shaft 44 sensing device 24 may transmit a signal to microprocessor 46 in response to changes in the magnetic flux. This signal may then be processed by microprocessor 46 to determine a position, such as an angular position, of a component or object directly or indirectly coupled with shaft 44, for example.

It will be appreciated that various embodiments of the invention may be configured to sense angular motion of one part or component with respect to another part or component without contact there between. Such angular motion or relative angular position may be determined over a predetermined range while providing relatively accurate linear output over the predetermined range.

While the exemplary embodiments of the present invention have been shown and described by way of example only, numerous variations, changes and substitutions will occur to those of skill in the art without departing from the invention herein. Accordingly, it is intended that the invention be limited only by the spirit and scope of the appended claims.

## Claims

1. An apparatus for sensing a position of an object, the apparatus comprising:
a magnet (22) mounted for rotation about an axis; and
a magnetic field-sensing device (24) mounted in fixed relation to and spaced from the magnet (22) wherein the magnet (22) is shaped to define a distance (26) between an exterior surface of the magnet (22) and a surface of the magnetic field-sensing device (24) whereby rotation of the magnet (22) causes the distance (26) to change at a rate so that a flux density distribution sensed by the magnetic field-sensing device (24) changes at a substantially linear rate.

2. The apparatus of claim 1 wherein the magnet (22) is configured to have a substantially elliptical shape.

3. The apparatus of claim 1 wherein the magnetic field-sensing device (24) is a Hall-effect sensor.

4. The apparatus of claim 1 wherein the magnet (22) is mounted in relation to the object so that the magnet (22) rotates about the axis in response to an angular displacement of the object.

5. The apparatus of claim 4 wherein the axis is substantially transverse to a longitudinal axis of the magnet (22).

6. A sensor system comprising:
a housing (42);
a magnet (22) having an exterior surface defining a radius of curvature;
a shaft (44) rotatably coupled with the housing (42), the magnet (22) connected to the shaft (44) for rotation about an axis in response to an angular displacement of an object; and
a magnetic field-sensing device (24) coupled with the housing (42) and spaced from the magnet (22) so that an air gap (26) is defined between the exterior surface of the magnet (22) and the magnetic field-sensing device (24) and changes at a rate in response to rotation of the magnet (22) so that a flux density level sensed by the magnetic field-sensing device (24) changes at a substantially linear rate.

7. The sensor system of claim 6 wherein at least a portion of the radius of curvature of the exterior surface of the magnet (22) and a distance defined by the air gap (26) are determined based on a magnetic field component that is perpendicular to a sensing surface of the magnetic field-sensing device (24).

8. The sensor system of claim 6 wherein at least a portion of the radius of curvature of the exterior surface of the magnet (22) and a distance defined by the air gap (26) are determined based on a flux line strength of the magnet (22).

9. The sensor system of claim 6 wherein the magnet (22) is configured with a substantially elliptical shape.

10. The sensor system of claim 9 wherein the magnetic field-sensing device (24) is a Hall-type sensor.

11. The sensor system of claim 6 wherein at least a portion of the radius of curvature of the exterior surface of the magnet (22) and a distance defined by the air gap (26) are determined based on a magnetic field component that is perpendicular to a sensing surface of the magnetic field-sensing device (24) and a flux line strength of the magnet (22).

12. The sensor system of claim 6 further comprising:
a microprocessor (46) configured to receive a data signal transmitted from the magnetic field-sensing device (24) in response to rotation of the magnet (22) and to determine an angular position of an object based on the transmitted data signal.

13. The sensor system of claim 12 further comprising:
a control system (50) configured to receive a data signal from the microprocessor (46) indicative of the angular position of the object and display data indicative of the angular position.

14. A method of detecting an angular displacement of an object, the method comprising:
providing a magnet (22) having an exterior surface defining a radius of curvature;
providing a magnetic field-sensing device (24);
rotatably mounting the magnet (22) in spaced relation to the magnetic field-sensing device (24) to define an air gap (26) there between; and
configuring the magnet (22) and the magnetic field-sensing device (24) so that rotation of the magnet (22) produces a substantially linear response over a range of angular rotation.

15. The method of claim 14 wherein the radius of curvature defines a substantially elliptical shape.

16. The method of claim 14 further comprising:
configuring the magnet (22) with respect to the magnetic field-sensing device (24) to define an air gap (26) there between whereby rotation of the magnet (22) causes the air gap (26) to change at a predetermined rate.

17. The method of clam 14 further comprising:
determining the radius of curvature and the air gap (26) based on at least one of a magnetic field component that is perpendicular to a sensing surface of the magnetic field-sensing device (24) and a flux line strength of the magnet (22).
